Europäisches Patentamt

**European Patent Office**

**Office européen des brevets**

(19)

(11) Publication number : **0 257 459 B1**

# (12) EUROPEAN PATENT SPECIFICATION

(45) Date of publication of patent specification :
**22.04.92 Bulletin 92/17**

(51) Int. Cl.⁵ : **B29C 67/14,** D07B 7/14,
B29D 29/00

(21) Application number : **87111708.1**

(22) Date of filing : **12.08.87**

(54) **A method and plant for the manufacture of steel-rubber shaft ropes.**

(30) Priority : **12.08.86 PL 261030**

(43) Date of publication of application :
**02.03.88 Bulletin 88/09**

(45) Publication of the grant of the patent :
**22.04.92 Bulletin 92/17**

(84) Designated Contracting States :
**DE FR GB LU SE**

(56) References cited :
EP-A- 0 108 016
DE-B- 1 208 483
DE-B- 1 255 917
FR-A- 2 172 221
GB-A- 967 701
PL-A- 100 479
US-A- 2 893 466
US-A- 3 129 806
US-A- 3 348 585
US-A- 3 428 504
US-A- 3 502 535
US-A- 3 941 637
US-A- 4 087 060

(73) Proprietor : **KATOWICKIE GWARECTWO
WEGLOWE KOPALNIA WEGLA KAMIENNEGO
WIECZOREK
ul. Szopienicka 1
40-432 Katowice (PL)**

(72) Inventor : **Lisiecki, Bronislaw
ul. Gen. Swierczewskiego 6
P-42-640 Piekary Sl. (PL)**
Inventor : **Hansel, Josef
ul. Skarbinskiego 10/32
P-30-071 Krakow (PL)**
Inventor : **Hau, Ryszard
ul. Tarnobrzeska 32
P-40-522 Katowice (PL)**
Inventor : **Gabrys, Kazimierz
ul. Pakuly 11a
P-41-706 Ruda Sl. (PL)**
Inventor : **Golaszewski, Antoni
ul. Sempolowskiej 3/9
P-41-907 Bytom (PL)**
Inventor : **Kandzia, Antoni
ul. Modrzejewskiej 2a
P-40-482 Katowice (PL)**
Inventor : **Kurek, Eugeniusz
ul. Gorniczego Stanu 20b
P-40-469 Katowice (PL)**
Inventor : **Machul, Janusz
ul. Swierkowa 2
P-41-400 Myslowice (PL)**
Inventor : **Marchwinski, Zdzislaw
ul. Chopina 2/5
P-41-902 Bytom (PL)**
Inventor : **Poturalski, Waldemar
ul. Piekna 49/6
P-40-591 Katowice (PL)**

(74) Representative : **Martin, Jean-Jacques et al
Cabinet REGIMBEAU 26, Avenue Kléber
F-75116 Paris (FR)**

**Description**

The subject of the present invention is a plant for the manufacture of steel-rubber shaft ropes, particularly those employed in the hoisting gear of mining shafts.

The hoisting gear employed in mining shafts has compensation ropes suspended under cages and gin tubs and used as a counter-balancing component. This is indispensible for the correct operation of the kinematic system of the hoisting gear. For that purpose, until now, in the mines there has been generally made use of flat steel ropes.

Although the above-mentioned ropes fulfil their task, they show many disadvantages and shortcomings in construction, being also very susceptible to the difficult conditions prevailing in mining shafts. They are particularly susceptible to corrosion and due to that the service life of such a rope does not usually exceed 2 - 3 years.

The compensation rope of every shaft is one section of a length corresponding to shaft depth, which in the case of mining shafts amounts to 500 - 1,200 metres and correspond to the weight of about 25 tonnes. Both the unit weight of 1-metre length and the overall dimensions of the shaft rope must be strictly specified and maintained over its entire length due to its being necessary to observe the dynamic and electric parameters of hoisting machines, what is related to the safe operation of hoisting gears.

A flat steel-rubber rope, whose double twisted steel ropes are stabilised with inserts and high-adhesion rubber, is known from the Polish specification No. 100,479. On the other hand, from the Polish application No. P. 253,172 there is known a steel-rubber rope wherein a telephone cable and calibrating components are vulcanised together with rubber-covered ropes. Both the ropes are made by the conventional method in a vulcanising press after steel ropes and crude rubber are prior manually arranged therein. The rope is vulcanised in lengths of two or three metres, and the finished vulcanised rope lengths are wound by hand onto an end-product drum.

Such a method of manufacturing of steel-rubber ropes shows many disadvantages, among them being no possibility of maintaining the required technical parameters, the impossibility of maintaining the axality of steel ropes and of their definite position along the cross-section of a steel-rubber rope, both in the horizontal and in the vertical plane, and the absence of the preliminary tension of steel ropes, etc.

From the US patent No. 394.164.7 there is also known a plant for manufacturing of ropes. However, the devices disclosed, lack any possibility of controlling the parameters of the product obtained and describe a different tensioning mechanism.

The subject of the present invention is a plant for the manufacture of steel-rubber shaft ropes. The essence of this solution consists in the application of a few machines performing determined operations, which are installed along the straight line just in turn to follow the subsequent operations throughout the manufacturing cycle. A guiding-feeding unit of the said plant is connected to a tensioning mechanism which is in turn connected to a vulcanising press via a conditioning press of steel ropes and crude rubber. The said vulcanising press is via a clamping press and an inspection station connected to an end-product winder. The tensioning mechanism is provided with two pressure beams connected to a lever system, said pressure beams being situated between the guiding unit and the tensioning mechanism which comprises a set of rollers and tighteners. The tensioning mechanism is from its inlet provided with a guiding beam and with a locking beam, being situated from the opposite sides as related to the axis of feeding of ropes, and ensuring the appropriate positioning of individual ropes. Whereas the winder of the plant is provided with a drum being slideably mounted along the axis upon the fixed base being in the form of a frame.

The said drum is connected to a hydraulic cylinder of a double-sided action. Due to the application of the tensioning machine there has been achieved a possibility of winding the end-product upon the wide multi-layer drums, however maintaining in the course of winding the axiality of the rope wound as related to the axis of the whole sequence of devices.

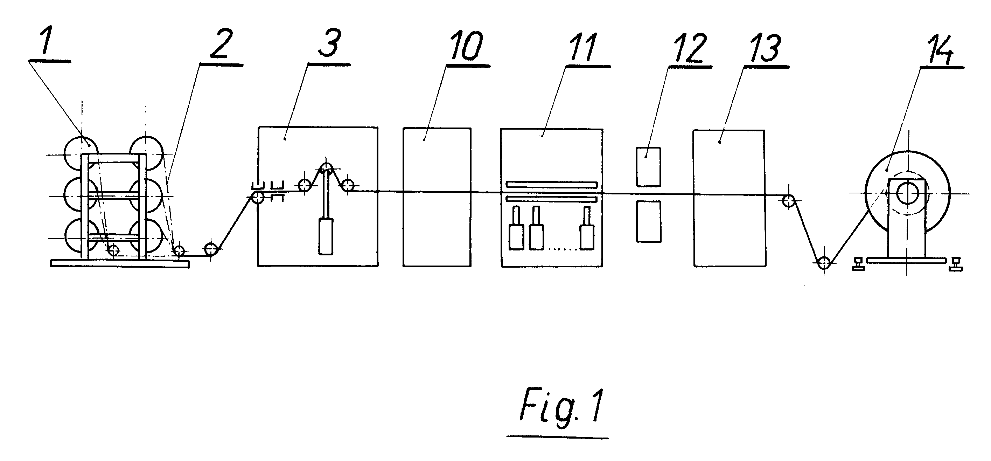

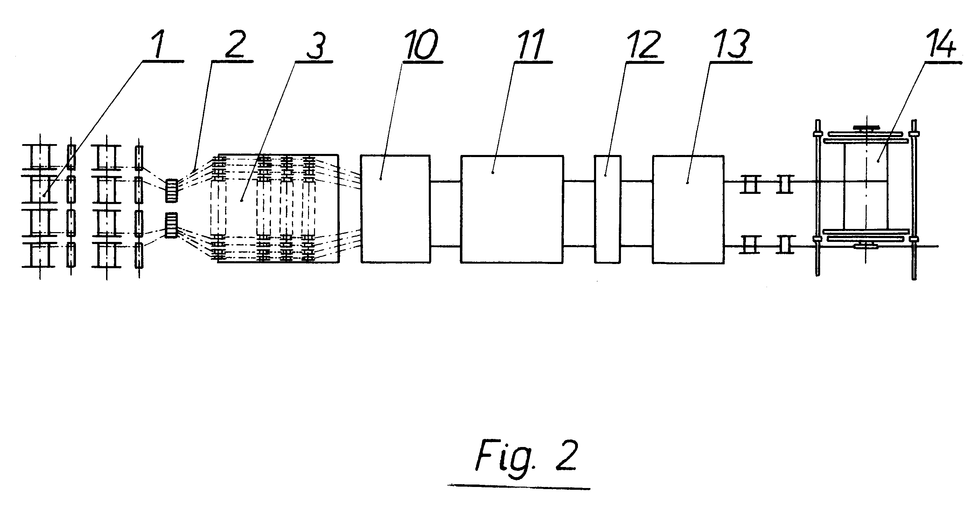

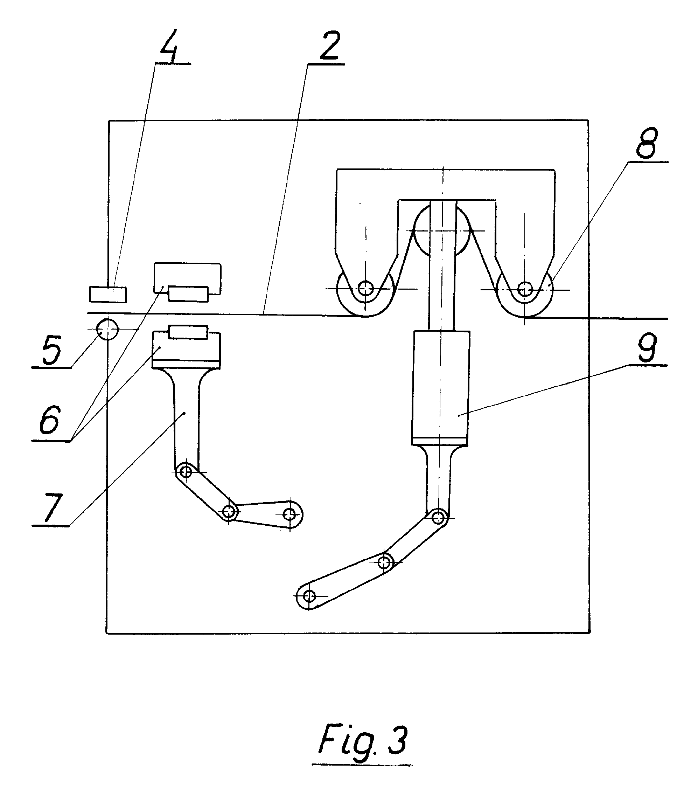

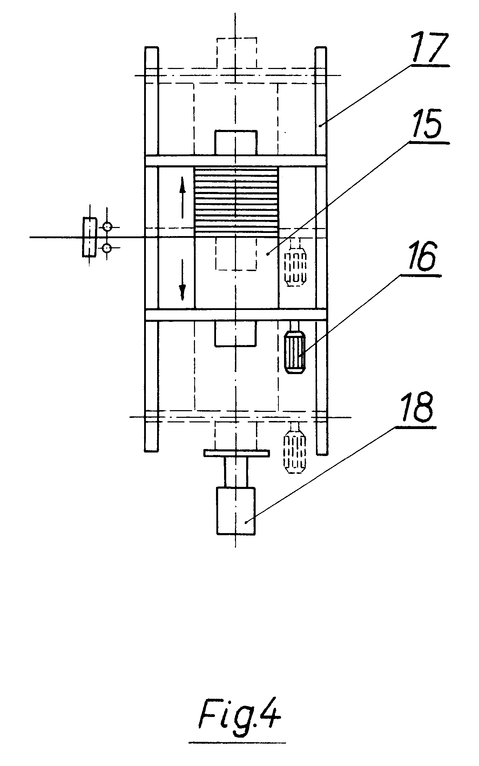

The essence of the present invention is shown in the example of embodiment in the drawing, wherein in Fig.1 there is diagrammatically shown a plant for the manufacture of steel-rubber ropes in its end view, in Fig.2 - the same plant is shown in its top view, in Fig.3 - the tensioning-pressure mechanism is shown in its end view, whereas in Fig.4 - the end-product winder in its top view.

As it has been shown in the drawing, the plant for the manufacture of steel-rubber ropes comprises a few machines performing the specified operations. The said machines are installed along the straight line in such a sequence in which there are performed the particular operations forming a manufacturing cycle. The first of the above-mentioned machines is a unit 1 guiding and feeding individual steel ropes 2 to a machine 3 tensioning these ropes and maintaining them in the pretensioned condition throughout the manufacturing cycle. From its inlet, tensioning mechanism 3 has a beam 4 looking the position of individual ropes 2 and a guide beam 5 beneath, cooperating with pressure beams 6, of which the lower one is secured on a lever system 7, ensuring the strictly definite pressure of ropes 2 being guided.

The proper torsion of each of ropes 2 is ensured by a tensioning roller unit provided with such a number of rollers 8 and lever tensioners 9 which number of steel ropes 2 is comprised in the end product. Tensioning and pressing mechanism 3 is via a conditioning press 10 of steel ropes 2 and crude rubber, via a vulcanising press 11, a clamping press 12 and an inspection-measurement station 13 connected to an end-product winder 14. All the above-mentioned machines may be arranged in tandem, enabling the two steel-rubber ropes be made at the same time. The end product is wound onto a drum 15 of winder 14, being slowly rotable around its axis by means of a motor 16, and at the same time being slid onto a frame 17 along the axis thereof by means of a double-acting hydraulic cylinder 18.

According to the present invention, the steel-rubber rope is manufactured in the following manner. Dependably on the kind of the shaft rope, the position and number of double-twisted steel ropes 2 is determined along its cross-section.

To this end, the number of drums with steel ropes 2 in guiding and feeding unit 1 and the same number of rollers 8 and tensioners 9 of the tensioning machine are appropriately preset. After ropes 2 are passed through the entire plant and their ends are secured upon drum 15 of winder 14 by means of tensioners 9, all ropes 2 are given their proper position along the cross-section of the rope, and proper pre-tension which is maintained throughout the entire manufacturing cycle. After steel ropes 2 and calibrating elements are conditioned with crude rubber in conditioning press 10, the lengths of steel rope 2 are passed to another press 11 where the rubber is vulcanised to steel ropes 2 and calibrating elements.

A vulcanised length of the shaft rope passes through inspection station 13 where the technical parameters of the end product are inspected and corrected. Therefrom the finished steel-rubber rope is passed to winder 14 whose drum 15 is moved towards the axis of the rope in such a manner that it be always wound into one point at maintaining its straight position in the horizontal plane, starting from guiding-feeding unit 1 up to drum 15 of winder 14.

## Claims

1. A plant for the manufacture of flat steel-rubber shaft ropes, comprising a guiding-feeding unit, a tensioning mechanism, a conditioning press of ropes and rubber, a vulcanising press and a clamping press, being arranged along the straight line, characterised in that between a clamping press /12/ and a winder /14/ there is placed an inspection-measurement station /13/, whereas a tensioning mechanism /3/ is provided with two pressure beams /6/ being connected to a lever system /7/, and situated between a guiding unit /1/ and a tensioning mechanism, which is composed of a set of rollers /8/ and tensioners /9/ and from its inlet provided with beams /4/ and /5/ being located at the opposite sides as related to the axis of feeding of the ropes, whereas winder /14/ is provided with an end-product winder /15/ being slideably mounted along the axis of said drum /15/ upon a stationary frame /17/ and connected to a double-acting hydraulic cylinder /18/.

## Patentansprüche

1. Anlage zur Herstellung von ebenen Stahl-Gummi-Schachtgurten mit einer Zuführ-Führungseinheit, einem Spannmechanismus, einer Konditionierpresse für Seile und Gummi, einer Vulkanisierpresse und einer Klemmpresse, welche längs einer Geraden angeordnet sind, dadurch **gekennzeichnet**, daß zwischen einer Klemmpresse (12) und einem Aufwickler (14) eine Inspektions-Meßstation (13) angeordnet ist, daß der Spannmechanismus (3) mit zwei Preßbalken (6) versehen ist, die an ein Hebelsystem (7) angeschlossen und zwischen der Führungseinheit (1) und dem Spannmechanismus angeordnet sind, welcher aus einem Satz Rollen (8) und Spannern (9) besteht und an seinem Eintritt Balken (4) und (5) aufweist, die bezüglich der Zuführrachse der Seile auf entgegengesetzten Seiten angeordnet sind, daß der Aufwickler (14) mit einer Aufwickeltrommel (15) für das Endprodukt ausgerüstet ist, die in Richtung längs der Achse der Aufwickeltrommel (15) auf einem stationärem Rahmen (17) verlagerbar und mit einem doppelt wirkenden hydraulischen Zylinder (18) verbunden ist.

## Revendications

1. Une installation pour la fabrication de câbles miniers plats en acier caoutchouc, comprenant une unité de guidage-alimentation, un mécanisme tendeur, une presse de conditionnement de câbles et de caoutchouc, une presse de vulcanisation et une presse de serrage qui sont disposés en ligne droite, caractérisé en ce qu'il est prévu, entre une presse de serrage (12) et un enrouleur (14), un poste d'inspection-mesure (13), alors qu'un mécanisme tendeur (3) est pourvu de deux poutres de pression (6) reliées à un système à leviers (7), et situées entre une unité de guidage (1) et un mécanisme tendeur, qui est composé d'un ensemble de rouleaux (8) et d'organes tendeurs (9), et qui est pourvu, à partir de son entrée, de poutres (4) et (5) situées sur des côtés opposés par rapport à l'axe de déplacement des câbles, tandis que l'enrouleur (14) est pourvu d'un organe enrouleur (15) de produit final qui est monté de façon à glisser le long de l'axe dudit tambour (15) sur un châssis stationnaire (17) et qui est relié à un cylindre hydraulique (18) à double effet.

Fig.1

EP 0 257 459 B1

Fig. 2

*Fig. 3*

Fig.4